# EUROPÄISCHE PATENTANMELDUNG

(11) **EP 1 415 693 A1**
(43) Veröffentlichungstag der Anmeldung: **06.05.2004**
(21) Anmeldenummer: 03022588.2
(22) Anmeldetag: 06.10.2003
(51) Int. Cl.: B01D 1/10, C08F 6/10

(54) **Verfahren zur Abtrennung von flüchtigen Bestandteilen aus Polymeren**

(30) Priorität: 17.10.2002 DE 10248571
(71) Anmelder: Bayer Aktiengesellschaft, 51368 Leverkusen (DE)
(72) Erfinder: König, Thomas, Dr., 51375 Leverkusen (DE); Kohlgrüber, Klemens, Dr., 51515 Kürten (DE); Liesenfelder, Ulrich, 5146 Bergisch Gladbach (DE); Bierdel, Michael, Dr., 51067 Köln (DE); Meyer, Helmut, Dr., 51519 Odenthal (DE); Weider, Richard, Dr., 51381 Leverkusen (DE); Krüger, Jörg, 47802 Krefeld (DE)

(57) **Zusammenfassung**

Es wird ein Verfahren zur Eindampfung von Polymeren beschreiben, welches dadurch gekennzeichnet ist, dass eine Mischung, wenigstens bestehend aus einem Polymer, restlichen Monomeren, Oligomeren und Lösemitteln, durch, bevorzugt in einer Ebene, vertikal und nebeneinander angeordnete Düsen in einen Entgasungsbehälter extrudiert wird und dass der Durchsatz an Polymer pro Düse 0,3 bis 2 kg/h, bevorzugt 0,5 bis 1,5 kg/h und besonders bevorzugt 0,7 bis 1,3 kg/h, beträgt und dass der Dampfdruck der flüchtigen Komponenten der in den Behälter eintretenden Polymerlösung größer als 2,5 bar ist, dass die Konzentration an Restflüchtigen kleiner als 20 Gew.-% ist, und dass der absolute Druck im Entgasungsbehälter insbesondere 50 bis 5000 Pa, bevorzugt 100 bis 1500 Pa, beträgt.

## Beschreibung

Die Erfindung betrifft ein Verfahren zur Abtrennung von flüchtigen Bestandteilen aus Polymeren, das bei guter Wirtschaftlichkeit geringe Schädigung der resultierenden Polymere und niedrige Restgehalte an flüchtigen Substanzen erreicht.

Das Entfernen von flüchtigen Komponenten aus einer Polymerlösung ist einer der letzten Verfahrensschritte bei der Herstellung vieler Polymere. Die zu entfernenden flüchtigen Bestandteile können beispielsweise Lösungsmittel, nicht polymerisierte Monomere oder während der Reaktion entstandene Oligomere sein. Häufig ist die Entfernung der Restflüchtigen aus den Polymerisaten mit einer thermischen Belastung verbunden, was zu unerwünschten Effekten wie Verschlechterung der Eigenfarbe, Vernetzung oder Depolymerisation mit Neubildung von Monomeren oder Oligomeren führen kann. Von Interesse ist stets, geringe Einbußen an Qualität mit einem guten Erfolg der Entgasung zu verbinden, da die Restflüchtigen die Materialeigenschaften verschlechtern können, unerwünschte Geruchsbelästigungen erzeugen und gegen sie auch gesundheitliche Bedenken bestehen, da viele dieser Stoffe toxisch sind.

Es sind verschiedene Verfahren zur Entfernung von flüchtigen Komponenten aus einer Polymerlösung bekannt. Eine Entfernung von Restmonomeren auf chemischem Wege wird beispielsweise in der EP 0 768 337 A1 beschrieben. Die Entfernung erfolgt durch Zusatz von CH-aciden organischen Verbindungen. Die chemische Umwandlung von Restmonomeren führt gegebenenfalls zu Produkten mit unerwünschter ökologischer Relevanz, welche den Einsatz der Produkte in der Praxis deutlich erschwert. Auch ist dieses Verfahren nicht zur Entfernung von Restlösemittel verwendbar.

Unter den gleichen Mängeln leidet das Verfahren zur Reduzierung von Restmonomeren mit ungesättigten Fettsäuren nach der US 42 15 024.

Ein anderes bekanntes Verfahren beschreibt die Reduzierung von Restmonomeren durch Behandlung der Formmassen mit Elektronenstrahlen, wie in der DE 28 43 292 A1 beschrieben. Das Verfahren ist jedoch im großtechnischen Maßstab viel zu aufwendig. Als ebenso aufwendig erweist sich ein in EP 0 798 314 A1 beschriebenes Verfahren zur Entfernung von Restflüchtigen durch Injektion von superkritischen Lösungsmitteln in die Polymerschmelze mit anschließender Entspannung.

Übliche Verfahren basieren auch auf der Entfernung von Restmonomeren und Lösungsmitteln mit Hilfe von mechanisch unterstützten Systemen. Beispielsweise werden Extruder (US 4 423 960), Entgasungszentrifugen (US 4 940 472) oder Dünnschichtverdampfer (DE 19 25 063 A1) verwendet.

All diese Verfahren weisen den Nachteil auf, dass schwere bewegte Teile in Geräten benötigt werden. Dies führt zu kostenintensiven, störungs- und verschleißanfälligen Prozessen. Auch führt der hohe mechanische Energieeintrag in einem derartigen Prozess zu hohen Temperaturen, die wiederum Produktschädigung begünstigen. Die mechanische Energie wird meist aus elektrischer Energie erzeugt, was gegenüber dem Einsatz von Primärenergie zu hohen Kosten und vermehrter Belastung der Umwelt führt.

In DE 100 31 766 A1 wird ein zweistufiges, kontinuierliches Verfahren zur Entgasung von Styrol-Copolymeren vorgestellt, in dem in einer ersten Stufe in einem Rohrbündelwärmeüberträger unter Verdampfung von flüchtigen Bestandteilen bei gleichzeitigem Energieeintrag die Konzentration von Polymer auf über 99,8 Gew.-% gebracht wird und in einer zweiten Stufe, einem Strangverdampfer, ohne Zwischenüberhitzung die Endkonzentration erreicht wird. Nachteile dieses Verfahrens liegen in der langen Verweilzeit bei hoher Temperatur im Sumpf der beiden Stufen, was zu unerwünschter Produktverfärbung führen kann, und in der langen Verweilzeit im Röhrverdampfer der ersten Stufe, in dem in Anwesenheit von Restmonomeren mit hoher Wandtemperatur geheizt wird.

In US 4 699 976 wird ein zweistufiges, kontinuierliches Verfahren zur Entgasung von kautschukhaltigen Styrolpolymeren beschrieben. Dieses Verfahren verwendet zwei Entgasungsstufen, die mit Rohrbündelwärmeüberträgern ausgerüstet sind. In der ersten Stufe wird die Polymerlösung auf einen Restgehalt an flüchtigen Bestandteilen zwischen 3 % und 15 % aufkonzentriert. In der zweiten Stufe wird dann auf Endkonzentration eingedampft. Innerhalb der Rohre tritt dabei Aufschäumen auf. Nachteilig ist hierbei die lange Verweilzeit unter Temperaturbelastung und in Anwesenheit von Restmonomeren, die sich aus der Verwendung von konventionellen Rohrbündelapparaten in der zweiten Stufe ergibt.

In EP 0 749 343 B1 wird ein Apparat und ein Verfahren beschrieben, bei dem der Wärmeübergang an die Polymerlösung durch einen speziell geformten Platten-Wärmeüberträger erfolgt. Der Produktaustritt erfolgt dabei waagrecht, aus übereinander angeordneten waagrechten Schlitzen. Nachteil dieser Anordnung ist, dass verschiedene schaumige Polymerstränge sich vereinigen und dadurch die Zugänglichkeit des Vakuums zu den Polymersträngen erschwert wird. Eine derartige Anordnung wird also hohe Restgehalte an flüchtigen Bestandteilen haben, was unerwünscht ist.

In "Neue Mischverfahren mit geringem Energiebedarf für Polymerherstellung und - aufbereitung", Chemische Industrie (1985) 37(7), Seiten 473 bis 476, wird ein Verfahren beschrieben, mit dem vor der letzten Stufe ein Schleppmittel mit dem Polymer vermischt wird, bevor das Produkt in die letzte Stufe, den Entgasungsbehälter, gebracht wird. Als Schleppmittel werden, wie dem Fachmann vertraut ist, vor allem inerte Gase wie beispielsweise Stickstoff oder Kohlendioxid oder aber Wasser verwendet. Beide Verfahren haben Nachteile. Inerte Gase verringern die Leistung der Kühler, in denen die flüchtigen Bestandteile kondensiert werden sollen, und vergrößern das von dem Vakuumsystem zu fördernde Volumen, wodurch das Verfahren teurer wird. Der Einsatz von Wasser ist nachteilhaft, weil dadurch die Temperatur der Kondensatoren auf oberhalb 0°C beschränkt werden muss, um Einfrieren zu verhindern, und dadurch die Leistung des Kondensationssystems eingeschränkt wird, was wiederum durch eine größere und teurere Vakuumpumpe kompensiert werden muss.

Gegenstand der Erfindung ist ein Verfahren zur Eindampfung von Polymeren, dadurch gekennzeichnet, dass eine Mischung, wenigstens bestehend aus einem Polymer, restlichen Monomeren, Oligomeren und Lösemitteln (Polymerlösung), durch, bevorzugt in einer Ebene, vertikal und nebeneinander angeordnete Düsen in einen Entgasungsbehälter extrudiert wird und dass der Durchsatz an Polymer pro Düse 0,3 bis 2 kg/h, bevorzugt 0,5 bis 1,5 kg/h und besonders bevorzugt 0,7 bis 1,3 kg/h, beträgt und dass der Dampfdruck der flüchtigen Komponenten der in den Behälter eintretenden Polymerlösung größer als 2,5 bar ist, dass die Konzentration an Restflüchtigen kleiner als 20 Gew.-% ist, und dass der absolute Druck im Entgasungsbehälter insbesondere 50 bis 5000 Pa, bevorzugt 100 bis 1500 Pa, beträgt.

Bevorzugt ist ein Verfahren, dadurch gekennzeichnet, dass die Zahl der Düsen, bezogen auf die Fläche, 1500 bis 5000 Düsen pro Quadratmeter, bevorzugt 2000 bis 3500 Düsen pro Quadratmeter, beträgt.

Bevorzugt ist auch ein Verfahren, welches dadurch gekennzeichnet ist, dass die freie Querschnittsfläche, d.h. der Innendurchmesser, der Düsen 0,3 bis 2 cm², bevorzugt 0,5 bis 1,2 cm², beträgt.

Die Düsen am Eintritt in den Entgasungsbehälter sind erfindungsgemäß vertikal angeordnet, sodass das einzudampfende Polymer von oben nach unten in den Entgasungsbehälter strömt. Die Düsen sind beispielsweise im oberen Bereich des Entgasungsbehälters angeordnet. Die Düsen können in einer Ebene oder auf unterschiedlichen Ebenen angeordnet sein. Bevorzugt ist eine Anordnung auf einer Ebene.

Die Größe von Entgasungsbehältern ist mit bestimmend für die Investitionssumme und damit für die Wirtschaftlichkeit eines Verfahrens zur Entgasung von Polymeren. Vor allem die Querschnittsfläche, die von den Düsen eingenommen wird, spielt hierbei eine wichtige Rolle. Ein zu geringer Abstand der Düsen ist jedoch ungünstig, da dann ein Verkleben der schaumigen Stränge mit der Folge schlechterer Vakuumzugänglichkeit und damit schlechterer Entgasung auftritt. Es hat sich als besonders günstig herausgestellt, von 1500 bis 5000 Düsen pro Quadratmeter anzuordnen, bevorzugt von 2000 bis 3500 Düsen pro Quadratmeter. Die Anordnung der Düsen kann in verschiedenen, dem Fachmann geläufigen Arten erfolgen, beispielsweise in Rechtecks- oder Dreiecksanordnung. Bevorzugt wird die Anordnung der Düsen auf den Eckpunkten von gleichseitigen Dreiecken. Die Querschnittsfläche der Düsen beträgt bevorzugt von 0,3 bis 2 cm², besonders bevorzugt von 0,5 bis 1,2 cm². Die Form der Düsen kann rechteckig, schlitzförmig, oval oder kreisförmig sein. Bevorzugt sind kreisförmige Düsen.

In der Regel wird für das Erreichen der Temperatur, die für den erfindungsgemäßen Dampfdruck erforderlich ist, ein Erwärmen der Polymerlösung erforderlich sein. Dies kann bevorzugt in einem Wärmeüberträger mit indirektem Wärmeaustausch erfolgen. Eine besonders geringe Verweilzeit in den Fließkanälen des Wärmeüberträgers, die der Produktschonung dienlich ist, erhält man, wenn die Düsen, aus denen die Polymerlösung austritt, direkt mit den einzelnen Kanälen des Wärmeüberträgers verbunden sind. Als Sonderfall können die Düsen die gleiche Querschnittsgeometrie haben wie der Kanal des Wärmeüberträgers. Es hat sich für die Produktqualität als günstig herausgestellt, Wärmeüberträger zu wählen, die, gegenüber der üblichen Bauart mit zylindrischen Rohren, eine niedrigere Verweilzeit und einen höheren Wärmeübergang aufweisen.

Günstig ist dabei weiterhin, dass zur Erzielung einer für die Entgasung erforderlichen Endtemperatur eine niedrigere Wandtemperatur erforderlich ist. Bevorzugt werden hierbei abgeflachte Rohre oder Rohre mit Einbauten zur Verbesserung des Wärmeübergangs, wie sie beispielsweise in US 40 62 525, in "Neue Mischverfahren mit geringem Energiebedarf für Polymerherstellung und -aufbereitung", Chemische Industrie (1985) 37(7), Seiten 473 bis 476, in "Statische Mischer und ihre Anwendung", Chemie-Ingenieur-Technik 52 (1980) Nr. 4, Seite 285-291 beschrieben werden. Bevorzugt werden abgeflachte Rohre und die in den obigen Literaturstellen beschriebenen Wendelmischer. Bevorzugt werden Rohre, deren Innendurchmesser vor der Verformung, d.h. vor der Abflachung, von 8 bis 15 mm, bevorzugt von 10 bis 12 mm, liegen und deren Länge von 200 bis 1000 mm, bevorzugt von 300 bis 700 mm liegt und die so abgeflacht sind, dass die lichte Weite des Spaltes von 2,5 bis 6 mm, bevorzugt von 3 bis 5 mm, liegt. Die für den Wendelmischer bevorzugte Geometrie ist ein Innendurchmesser von 7 bis 15 mm, besonders bevorzugt von 10 bis 12 mm, und eine Länge von 100 bis 500 mm, bevorzugt von 150 bis 300 mm.

Bevorzugt wird die Polymerlösung vor dem Eintritt in die Düsen durch einen Wärmeüberträger aufgeheizt, dessen Verweilzeit von 0,5 bis 3 Minuten, besonders bevorzugt von 1 bis 2 Minuten, beträgt und von dem jeder Kanal bevorzugt direkt mit je einer Düse verbunden ist.

Bevorzugt ist auch ein Verfahren, bei dem der Wärmeüberträger eine statische Mischeinrichtung, bevorzugt einen Wendelmischer, zur Verbesserung des Wärmeübergangs enthält, wobei der bevorzugte Innendurchmesser 7 bis 15 mm beträgt, besonders bevorzugt 10 bis 12 mm und die bevorzugte Länge 100 bis 500 mm, besonders bevorzugt 150 bis 300 mm, beträgt.

Der Wärmeüberträger liegt vorzugsweise in der Form von runden Rohren vor, die in der Mitte zur Verbesserung des Wärmeübergangs abgeflacht wurden. Die abgeflachten Rohre sind bevorzugt aus Rohren hergestellt, deren Innendurchmesser vor der Verformung, d.h. vor dem Abflachen, 8 bis 15 mm, besonders bevorzugt 10 bis 12 mm, beträgt und deren Länge bevorzugt 200 bis 1000 mm, besonders bevorzugt 300 bis 700 mm, beträgt. Die Rohre sind so abgeflacht, dass die lichte Weite des Spaltes 2,5 bis 6 mm, bevorzugt 3 bis 5 mm, beträgt.

Bevorzugt ist auch ein Verfahren, dadurch gekennzeichnet, dass eine oder mehrere Eindampfstufen zur Vorkonzentrierung auf unter 20 Gew.-% verwendet werden.

Wenn die Polymerlösung mit mehr als 20 Gew.-% an flüchtigen Komponenten im Zulauf vorliegt, ist es günstig, sie in einer Vorstufe bei kälterer Temperatur zunächst auf eine Konzentration kleiner als 20 Gew.-% einzudampfen und dann in die Endstufe zu führen, da ansonsten die Gasgeschwindigkeiten und der Aufwand für die Vakuumtechnik zu hoch werden.

Wenn aus der Reaktion oder einer vorherigen Eindampfstufe eine Lösung anfällt, die von 50 bis 80 Gew.-% Polymer enthält, so wird diese Lösung bevorzugt in einer Voreindampfstufe auf eine Konzentration größer als 80 Gew.-% eingedampft. Üblicherweise wird hierbei ein Entgasungsbehälter, dem das Produkt aus einem Wärmetauscher zufließt, verwendet. Dieser kann unterschiedlicher Bauart sein. Beispielsweise kann ein konventioneller Rohrbündelwärmeüberträger, ein Wendelmischer oder ein Schlangenrohr, wie beispielsweise in der DE 27 19 968 C2 beschrieben, eingesetzt werden. Der Entgasungsbehälter der Voreindampfstufe hat eine oder mehrere Öffnungen, durch die die Flüchtigen gasförmig abgezogen werden. Der absolute Druck im Entgasungsbehälter der Voreindampfstufe wird bevorzugt von 0,5 bis 3 bar gewählt. Besonders bevorzugt ist ein Druck von 1 bis 2 bar.

Besonders günstig für die Produktqualität ist, auch für die Voreindampfstufe einen Wärmeüberträger mit geringer Verweilzeit (von 0,5 bis 3 Minuten, bevorzugt von 1 bis 2 Minuten) und verbessertem Wärmeübergang einzusetzen. Bevorzugt wird hierbei ein Wärmeüberträger, dessen Strömungskanäle aus abgeflachten Rohren, die vor der Verformung einen Innendurchmesser von 8 bis 20 mm, besonders bevorzugt 8 bis 14 mm, ganz besonders bevorzugt 10 bis 12 mm, haben, bevorzugt abgeflacht auf 2,5 bis 7 mm, besonders bevorzugt auf 3 bis 5 mm, mit einer bevorzugten Länge von 200 bis 3000 mm, besonders bevorzugt von 300 bis 1500 mm, ganz besonders bevorzugt von 500 mm bis 1000 mm, bestehen. Ebenfalls bevorzugt ist ein Wendelmischer mit einem Innendurchmesser von 8 bis 15 mm, besonders bevorzugt von 10 bis 12 mm. Die Länge des Wendelmischers beträgt bevorzugt von 100 bis 1000 mm, besonders bevorzugt von 200 bis 500 mm.

In der Voreindampfstufe besteht das prinzipielle Problem, dass eine Fehlverteilung zwischen einzelnen Strömungskanälen auftreten kann, wie beispielsweise in "Slit Devolatilization", G. Ianniruberto et. al., in "Polymer Devolatilization", Marcel Dekker Inc., 1996, ISBN 0-8247-9627-6, S. 291-323, beschrieben wird. Erfindungsgemäß wird dieses Problem dadurch behoben, dass in jedem Strömungskanal des Wärmeüberträgers ein zusätzlicher Strömungswiderstand eingebaut wird. Dies kann beispielsweise eine Rohrverengung, ein oder mehrere Elemente eines statischen Mischers oder eine Lochblende sein. Bevorzugt wird eine Lochblende mit einem Durchmesser von 1,5 bis 3 mm eingesetzt. Die Länge der Lochblende kann von 5 bis 150 mm, bevorzugt von 20 bis 70 mm betragen. Insbesondere geschieht dies in dem Bereich, in dem die Polymerlösung einphasig vorliegt, bevorzugt im ersten Drittel, besonders bevorzugt im Eintrittsbereich des Strömungskanals.

Bevorzugt ist auch ein Verfahren, bei dem ein Homo- oder Copolymer von Styrol behandelt wird, besonders bevorzugt ein Copolymer aus Styrol/Acrylnitril, Styrol/Methylmethacrylat, Styrol/Methylmethacrylat/Acrylnitril, α-Methylstyrol/Acrylnitril, Styrol/α-Methylstyrol/Acrylnitril, Styrol/N-Phenylinaleinimid und Styrol/ N-Phenylmaleinimid/Acrylnitril mit einem Gehalt an Vinylaromat von vorzugsweise 40 bis 85 Gew.-%, ganz besonders bevorzugt Styrol-Copolymere aus Styrol-Acrylnitril und α-Methylstyrol/Acrylnitril mit vorzugsweise 67 bis 84 Gew.-% Vinylaromat und 16 bis 33 Gew.-% Acrylnitril.

Bevorzugt ist auch ein Verfahren, bei dem ein kautschukmodifiziertes Homo- oder Copolymer von Styrol behandelt wird, besonders bevorzugt ein Copolymer aus Styrol/Acrylnitril, Styrol/Methylmethacrylat, Styrol/Methylmethacrylat/Acrylnitril, α-Methylstyrol/Acrylnitril, Styrol/α-Methylstyrol/Acrylnitril, Styrol/N-Phenylmaleinimid und Styrol/N-Phenylmaleinimid/Acrylnitril mit einem Gehalt an Vinylaromat von vorzugsweise 40 bis 85 Gew.-%, ganz besonders bevorzugt Styrol-Copolymere aus Styrol-Acrylnitril und α-Methylstyrol/Acrylnitril mit vorzugsweise 67 bis 84 Gew.-% Vinylaromat und 16 bis 33 Gew.-% Acrylnitril, wobei bevorzugt als kautschukartiges Polymer Polybutadien und ein Terpolymer aus Ethylen, Propylen und Ethylidenorbornen eingesetzt wird.

Gegenstand der Erfindung ist auch ein Styrolpolymer mit oder ohne Bestandteile an Kautschuk, dass nach dem erfindungsgemäßen Verfahren behandelt wird und einen Restgehalt von flüchtigen Bestandteilen von kleiner als 300 ppm hat.

Das erfindungsgemäße Verfahren eignet sich zur Entfernung von beliebigen flüchtigen Bestandteilen aus Polymeren, insbesondere zur Entfernung niedermolekularer monomerer oder oligomerer Komponenten aus Lösungen von unvernetzten thermoplastischen Polymeren in ihren Monomeren oder beliebigen Lösungsmitteln mit dem Ziel, restflüchtigenarme Polymere herzustellen.

Das beschriebene Verfahren eignet sich besonders für die Herstellung von Styrol-Copolymeren mit guter Farbe und von kautschukmodifizierten Styrol-Copolymeren mit guter Farbe und guten mechanischen Eigenschaften.

Polymere, die zur Abtrennung von flüchtigen Bestandteilen besonders in Frage kommen, umfassen alle unvernetzten, thermisch aufschmelzbaren Polymere, wie z.B. Homo- und Copolymere von Styrol, Acrylsäuren, Acrylaten und Methacrylaten, Carbonaten, Estern, Amiden, Urethanen, Phenylethern und -sulfiden, um hier nur einige gängige Vertreter dieser Verbindungsklasse zu nennen.

Ganz besonders für die Abtrennung von niedermolekularen flüchtigen Bestandteilen nach dem erfindungsgemäßen Verfahren einsetzbare thermoplastische Polymerlösungen sind die Reaktionslösungen von Styrolpolymeren und Styrol-Copolymeren. Dies sind Vinylpolymere, die zumindest aus einem vinylaromatischen Monomer, insbesondere Styrol, α-Methylstyrol oder eines kemsubstituierten Styrols bestehen, gegebenenfalls copolymerisiert mit einem oder mehreren verschiedenen ethylenisch ungesättigten Monomeren aus der Gruppe Acrylnitril, Methacrylnitril, Ester der Acrylsäure oder Methacrylsäure, Maleinsäureanhydrid und N-substituiertes Maleinimid, sowie gegebenenfalls in Gegenwart von einem oder mehreren zusätzlich enthaltenen gelösten oder gequollenen kautschukartigen Polymeren. Weiterhin kann die Reaktionslösung Lösungsmittel enthalten. Dies sind im Allgemeinen niedrig siedende Verbindungen, die mit der Reaktionslösung mischbar sind. Es können beispielsweise aromatische Verbindungen wie beispielsweise Benzol, Toluol, Ethylbenzol, Monochlorbenzol oder Xylol sein, Ketone wie Propanon und 2-Butanon oder höhere Ketone, Alkohole wie Methanol, Ethanol, n- oder Isopropanol oder höhere Alkohole, Ether, chlorierte Alkane wie Mono- oder Dichlormethan oder unchlorierte Alkane wie Pentan, n-Hexan oder Cyclohexan sein.

Bevorzugt einsetzbare Vinylpolymere sind solche aus Styrol/Acrylnitril, Styrol/Methylmethacrylat, Styrol/Methylmethacrylat/Acrylnitril, α-Methylstyrol/Acrylnitril, Styrol/α-Methylstyrol/Acrylnitril, Styrol/N-Phenylmaleinimid und Styrol/N-Phenylmaleinimid/Acrylnitril mit einem Gehalt an Vinylaromat von vorzugsweise 40 bis 85 Gew.-%.

Besonders bevorzugt einsetzbare Vinylpolymere sind solche aus Styrol/Acrylnitril und α-Methylstyrol/Acrylnitril mit vorzugsweise 67 bis 84 Gew.-% Vinylaromat und 16 bis 33 Gew.-% Acrylnitril.

Die erfindungsgemäßen Vinylpolymere besitzen vorzugsweise Molekulargewichte Mw (Gewichtsmittel der Molmassenverteilung) von 10 000 g/mol bis 200 000 g/mol und Grenzviskositäten [η] von 20 bis 100 ml/g, gemessen in Dimethylformamid bei 25°C.

Derartige Vinylpolymere sind weitreichend bekannt. Die Herstellung dieser Polymere kann dabei durch Masse-, Lösungs-, Suspensions- oder Emulsionspolymerisation, gegebenenfalls unter Zusatz geeigneter Polymerisationsinitiatoren erfolgen. Insbesondere kommen für das erfindungsgemäße Verfahren aber die Reaktionslösungen der Masse- und Lösungsverfahren in Frage, die gegebenenfalls bis zu 25 Gew.-%, bevorzugt bis zu 18 Gew.-% zusätzlich der Polymerisation zugesetzter kautschukartiger Polymere, enthalten können. Diese kautschukartigen Polymere können beispielsweise Polybutadien, Polyisopren oder Polychloropren sein, oder Copolymere, die mehr als 50 Gew.-% Butadien oder Isopren sowie weitere Vinylmonomere wie Styrol, α-Methylstyrol oder Acrylnitril enthalten. Die Copolymere können in zufälliger Struktur oder als Block-Copolymer vorliegen. Die genannten kautschukartigen Verbindungen können teilweise oder ganz hydriert sein. Des weiteren können Ethylencopolymere wie beispielsweise ein Copolymer aus Ethylen, Propylen und einer Dienkomponente wie beispielsweise Ethylidennorbornen eingesetzt werden. Bevorzugt als kautschukartiges Polymer sind Polybutadien und ein Terpolymer aus Ethylen, Propylen und Ethylidenorbomen.

Erfmdungsgemäß wird die Entgasungsaufgabe dadurch erfüllt, dass eine Polymerlösung, die mit flüchtigen Komponenten aus vorherigen Prozessschritten beladen ist, über eine oder mehrere nebeneinander liegende Düsen in einen Entgasungsbehälter extrudiert wird. Die Temperatur am Austritt aus den Düsen in den Entgasungsbehälter (nachfolgend auch als Eintrittstemperatur in den Entgasungsbehälter bezeichnet) wird so gewählt, dass die Polymerlösung am Eintritt in den Prozessschritt einen Dampfdruck von mehr als 2,5 bar besitzt. Hierbei ist zu beachten, dass, wenn man sich diesen Dampfdruck auf rechnerischem Wege verschafft, die Wechselwirkung von flüchtigen Bestandteilen mit dem Polymer berücksichtigt werden muss. In dem Entgasungsbehälter liegt ein absoluter Druck von 50 bis 5000 Pa an, bevorzugt von 100 bis 1500 Pa. Hierbei schäumt das Polymer und bildet schaumige Stränge aus, die in den Entgasungsbehälter herunterreichen und nach einer gewissen Strecke unter Eigengewicht reißen. Das Polymer sammelt sich dann im Sumpf des Entgasungsbehälters und wird mit einer dem Fachmann vertrauten Vorrichtung, beispielsweise einer Zahnrad- oder Extruderpumpe, ausgetragen. Die Brüden werden durch Öffnungen im Entgasungsbehälter abgeführt. Die Düsen werden bevorzugt auf gleicher Höhe angeordnet, aber auch eine Anordnung auf unterschiedlichen Höhen ist möglich: Der hohe Dampfdruck der Polymerlösung ist vorteilhaft, weil hierdurch ein starkes Schäumen und ein guter Entgasungserfolg ohne Einsatz von nicht kondensierbaren Schleppmitteln, die die Vakuumanlage belasten würden, erreicht wird.

Nachfolgend wird die Erfindung anhand der Figuren näher erläutert. Es zeigen:
- Figur 1: eine schematische Darstellung einer ersten bevorzugten Ausführungsform des erfindungsgemäßen Verfahrens
- Figur 2: eine schematische Darstellung einer zweiten bevorzugten Ausführungsform des erfindungsgemäßen Verfahrens

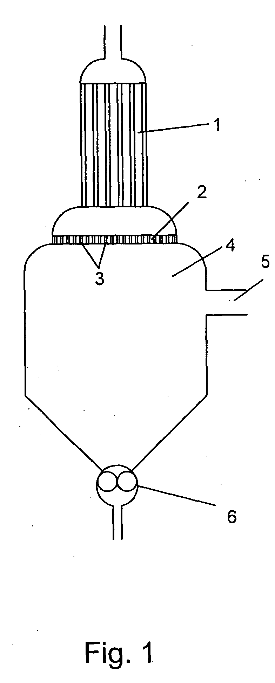

In Figur 1 ist ein Entgasungsbehälter 4 mit einem Auslass 5 für die leicht flüchtigen Komponenten und einer Austragsvorrichtung 6 für das Polymer dargestellt. Im oberen Bereich des Entgasungsbehälters 4 wird das Polymer über vertikal angeordnete Düsen 3 von oben nach unten in den Entgasungsbehälter 4 extrudiert. Die Düsen 3 sind in einer Düsenplatte 2, d.h. in einer Ebene, nebeneinander angeordnet. Vor dem Eintritt in die Düsen 3 wird das Polymer in einem Wärmetauscher 1 vorgewärmt.

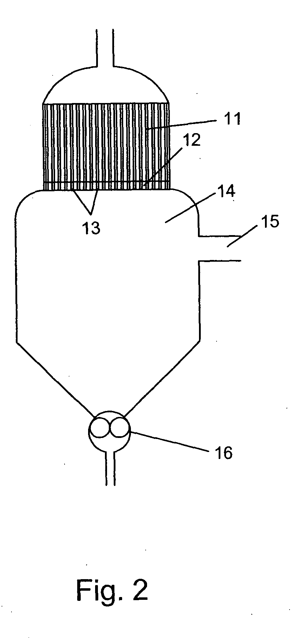

In Figur 2 ist eine weitere bevorzugte Ausführungsform eines Entgasungsbehälters 14 mit einem Auslass 15 für die leicht flüchtigen Komponenten und einer Austragsvorrichtung 16 für das Polymer gezeigt. Im oberen Bereich des Entgasungsbehälters 14 wird das Polymer über vertikal angeordnete Düsen 13 von oben nach unten in den Entgasungsbehälter 14 extrudiert. Die Düsen 13 sind in einer Düsenplatte 12, d.h. in einer Ebene, nebeneinander angeordnet. Vor dem Eintritt in die Düsen 13 wird das Polymer in einem Wärmetauscher 11 vorgewärmt. Im Unterschied zu der in Figur 1 dargestellten Ausführungsform ist hier je ein Kanal des Wärmetauschers 11 direkt mit einer Düse 13 in der Düsenplatte 12 verbunden.

### Beispiele

### Beispiel 1:

19 kg/h eines kautschukhaltigen Styrol-Acrylnitril-Copolymers mit Restmonomeren und Restlösungsmittel wurden durch 19 Bohrungen in einen Entgasungsbehälter extrudiert. Der Durchmesser der Bohrungen betrug 10 mm. Die Zusammensetzung der flüchtigen Komponenten betrug 3 Gew.-% Acrylnitril, 65 Gew.-% Styrol, 25 Gew.-% Ethylbenzol und 7 Gew.-% 2-Butanon. Der Druck im Entgasungsbehälter betrug von 1100 bis 1200 Pa. Der Gesamtanteil an Flüchtigen wurde variiert, ebenso die Eintrittstemperatur in den Entgasungsbehälter.

Tabelle 1 zeigt die Dampfdrücke der Lösung bei Eintrittstemperatur und die Restgehalte, die erzielt wurden. Es ist klar zu erkennen, dass ein Dampfdruck größer als 2,5 bar für ein gutes Entgasungsergebnis erforderlich ist.

**Tabelle 1**

| Eintrittstemp. | Gehalt Flüchtige | Dampfdruck | Restgehalt | | | |
|---|---|---|---|---|---|---|
| | | | Acrylnitril | Styrol | Ethylbenzol | Butanon |
| 240°C | 4.2% | 1.91 bar | 33 ppm | 1364 ppm | 673 ppm | 151 ppm |
| 240°C | 9.4% | 3.8 bar | 3 ppm | 127 ppm | 55 ppm | 8 ppm |
| 210°C | 9.4% | 2.4 bar | 8 ppm | 572 ppm | 309 ppm | 37 ppm |

### Beispiel 2:

Eine Lösung eines kautschukmodifizierten Styrol-Acrylnitril-Copolymers wurde durch eine Öffnung mit 10 mm Durchmesser in einen Entgasungsbehälter mit 1000 Pa Absolutdruck entspannt. Der Durchsatz an Polymer betrug von 1 bis 3 kg/h. Die Temperaturen der Lösung am Eintritt in den Entgasungsbehälter betrugen von 229°C bis 230°C. Der Anteil an flüchtigen Komponenten betrug 10 Gew.-% der gesamten Lösung. Die Zusammensetzung der flüchtigen Komponenten war 5 Gew.-% Acrylnitril, 20 Gew.-% 2-Butanon und 75 Gew.-% Styrol. Tabelle 2 zeigt die Restgehalte, die erzielt wurden. Der Vorteil der kleinen Massenströme für das Entgasungsergebnis ist klar erkennbar.

Das Beispiel zeigt, dass es für minimale Restgehalte vorteilhaft ist, den Durchsatz an Polymer pro Bohrung unter 2 kg/h, bevorzugt unter 1,5 kg/h und besonders bevorzugt unter 1,3 kg/h, zu wählen.

**Tabelle 2**

| Durchsatz | Restgehalte | | |
|---|---|---|---|
| | Acrylnitril | Butanon | Styrol |
| 1 kg/h | 8 ppm | <20 ppm | 28 ppm |
| 2 kg/h | 14 ppm | 97 ppm | 560 ppm |
| 3 kg/h | 23 ppm | 210 ppm | 1100 ppm |

### Beispiel 3:

Tabelle 3 zeigt die Eintrittstemperaturen, gemessen an der Düse in den Entgasungsbehälter, und die Verweilzeit für einen Durchsatz von 1,5 kg/h einer Lösung eines mit Butadien-Kautschuk modifizierten Copolymers aus Styrol und Acrylnitril. Die Eintrittskonzentration der Lösung war im Bereich von 12 bis 13 Gew.-% Flüchtige. Der Austrittsdruck war 1000 Pa. Verglichen wird ein zylindrisches Rohr der Länge 1310 mm mit einem Innendurchmesser von 10 mm mit einem Rohr der Länge 700 mm, das über eine Länge von 600 mm so abgeflacht worden ist, dass ein Spalt von einer lichten Weite von 5 mm übrigbleibt. Die Überlegenheit des abgeflachten Rohres zeigt sich deutlich an der Eintrittstemperatur in den Entgasungsbehälter. Der höhere Druckverlust liegt im Rahmen dessen, was technisch leicht beherrscht werden kann.

**Tabelle 3**

| | | |
|---|---|---|
| Rohrlänge | 1310 mm | 700 mm |
| Rohrgeometrie | zylindrisch | abgeflacht über 600 mm |
| Düsendurchmesser | 10 mm | 10 mm |
| Eintrittstemperatur (Rohr) | 180°C | 170°C |
| Eintrittstemperatur (Entgasungsbehälter) | 218°C | 226°C |
| Anteil flüchtiger Bestandteile | 12,3 % | 13 % |
| Druckverlust | 15,4 bar | 40 bar |
| Verweilzeit | 184 s | 77 s |

### Beispiel 4:

6 kg/h einer Reaktionslösung mit 3,3 kg/h eines Copolymers aus 76 Gew.-% Styrol und 24 Gew.-% Acrylnitril wurden in einer ersten Stufe auf 86,25 Gew.-% Polymergehalt und 13,75 Gew.-% flüchtige Bestandteile eingedampft. Der Wärmeüberträger der ersten Stufe war ein Rohr mit 1100 mm Gesamtlänge, das auf einer Länge von 1075 mm auf eine Spaltbreite von 4 mm abgeflacht wurde. Der Druck in der ersten Stufe betrug 1 bar.

Die in der ersten Stufe voreingedampfte Lösung wurde in einem Wärmeüberträger, der aus 3 Rohren mit 12 mm Innendurchmesser und einer Länge von 340 mm bestand, wobei die Rohre über eine Länge von 300 mm auf einen Spalt von 3,5 mm abgeflacht wurden, erwärmt. Die Austrittstemperatur war 221°C. Die Düse hatte einen kreisförmigen Querschnitt mit einem Durchmesser von 12 mm. Der Dampfdruck der Lösung bei der Temperatur am Austritt betrug 3,4 bar. Der Druck im Abscheidebehälter betrug 120 Pa. Die Absorbanz wurde in Lösung von 5 Gew.-% Polymer in Tetrahydrofuran bei Durchstrahlung einer Küvette von 100 mm Dicke im Zweistrahlphotometer mit reinem THF als Referenz bestimmt und betrug bei einer Lichtwellenlänge von 450 nm 3.24 %, bei 550 nm 1.97 % und bei 650 nm 1.66 %. Die Restgehalte betrugen 2 ppm Acrylnitril, 38 ppm Ethylbenzol und 60 ppm Styrol.

## Patentansprüche

1. Verfahren zur Eindampfung von Polymeren, **dadurch gekennzeichnet, dass** eine Mischung, wenigstens bestehend aus einem Polymer, restlichen Monomeren, Oligomeren und Lösemitteln, durch, bevorzugt in einer Ebene, vertikal und nebeneinander angeordnete Düsen in einen Entgasungsbehälter extrudiert wird und dass der Durchsatz an Polymer pro Düse 0,3 bis 2 kg/h, bevorzugt 0,5 bis 1,5 kg/h und besonders bevorzugt 0,7 bis 1,3 kg/h, beträgt und dass der Dampfdruck der flüchtigen Komponenten der in den Behälter eintretenden Polymerlösung größer als 2,5 bar ist, dass die Konzentration an Restflüchtigen kleiner als 20 Gew.-% ist, und dass der absolute Druck im Entgasungsbehälter insbesondere 50 bis 5000 Pa, bevorzugt 100 bis 1500 Pa, beträgt.

2. Verfahren nach Anspruch 1, **dadurch gekennzeichnet, dass** die Zahl der Düsen, bezogen auf die Fläche, 1500 bis 5000 Düsen pro m², bevorzugt 2000 bis 3500 Düsen pro m², beträgt.

3. Verfahren nach einem der Ansprüche 1 oder 2, **dadurch gekennzeichnet, dass** die freie Querschnittsfläche der Düsen 0,3 bis 2 cm², bevorzugt 0,5 bis 1,2 cm², beträgt.

4. Verfahren nach einem der Ansprüche 1-3, **dadurch gekennzeichnet, dass** die Polymerlösung vor dem Eintritt in die Düsen durch einen Wärmeüberträger erwärmt wird.

5. Verfahren nach Anspruch 4, **dadurch gekennzeichnet, dass** die Verweilzeit der Polymerlösung in dem Wärmeüberträger von 0,5 bis 3 Minuten, bevorzugt von 1 bis 2 Minuten, beträgt.

6. Verfahren nach einem der Ansprüche 4 oder 5, **dadurch gekennzeichnet, dass** der Wärmeüberträger Kanäle zur Durchleitung der Polymerlösung aufweist, welche jeweils direkt mit je einer Düse verbunden sind.

7. Verfahren nach einem der Ansprüche 1-6, **dadurch gekennzeichnet, dass** eine oder mehrere Eindampfstufen zur Vorkonzentrierung der Polymerlösung auf unter 20 Gew.-% vorgesehen sind.

8. Verfahren nach Anspruch 7, **dadurch gekennzeichnet, dass** wenigstens eine Eindampfstufe aus einem Entgasungsbehälter besteht, welchem ein Wärmeüberträger vorgeschaltet ist.

9. Verfahren nach einem der Ansprüche 1-8, **dadurch gekennzeichnet, dass** die Polymerlösung wenigstens ein Homo- oder Copolymer von Styrol enthält, vorzugsweise ein Copolymer aus Styrol/Acrylnitril, Styrol/Methylmethacrylat, Styrol/Methylmethacrylat/Acrylnitril, α-Methylstyrol/Acrylnitril, Styrol/α-Methylstyrol/Acrylnitril, Styrol/-N-Phenylmaleinimid und Styrol/N-Phenylmaleinimid/Acrylnitril, bevorzugt mit einem Gehalt an Vinylaromat von 40 bis 85 Gew.-%, besonders bevorzugt ein Styrol-Copolymere aus Styrol-Acrylnitril und α-Methylstyrol/-Acrylnitril mit vorzugsweise 67 bis 84 Gew.-% Vinylaromat und 16 bis 33 Gew.-% Acrylnitril.

10. Styrolpolymer mit oder ohne Bestandteile an Kautschuk, das nach einem Verfahren gemäß einem der Ansprüche 1-9 hergestellt wird und einen Restgehalt von flüchtigen Bestandteilen von kleiner als 300 ppm aufweist.
